# EUROPÄISCHE PATENTANMELDUNG

(11) **EP 1 286 302 A2**
(43) Veröffentlichungstag der Anmeldung: **26.02.2003**
(21) Anmeldenummer: 02015442.3
(22) Anmeldetag: 11.07.2002
(51) Int. Cl.: G06K 19/077

(54) **Verfahren zur Herstellung einer kontaktlosen Chipkarte**

(30) Priorität: 23.08.2001 DE 10141382
(71) Anmelder: Digicard Gesellschaft m.b.H., 1220 Wien (AT)
(72) Erfinder: Dorner, Frank, 1220 Wien (AT)
(74) Vertreter: Haft, von Puttkamer, Berngruber, Czybulka

(57) **Zusammenfassung**

Zur Herstellung einer kontaktlosen Chipkarte (1) durch Laminieren einer Schichtanordnung aus einer Innenschicht (4) mit einer Ausnehmung (5) zur Aufnahme des Chipmoduls (2) und je einer Deckfolie (6, 7) auf beiden Seiten der Innenschicht unter Druck und Wärme wird die Innenschicht(4) aus zwei mit ihren Innenseiten aufeinander liegenden Folien (10, 11) gebildet, zwischen denen eine Antennenspule (3) angeordnet ist. Jede Folie (10, 11) wird mit einer Ausnehmung (13) versehen und an der Innenseite im Bereich der Ausnehmung (13) und dem für die Antennenspule (3) vorgesehenen Bereich (15, 16) mit einer schäumbaren Kunststoffmasse (9) bedruckt. In die Ausnehmung (13) einer der Folien (10, 11) wird das Chipmodul (2) und auf den dafür vorgesehenen Bereich (15, 16) die Antennenspule (3) gegeben. Die beiden Folien (10, 11) werden dabei so aufeinander gelegt werden, dass die Ausnehmungen (13) und die mit der schäumbaren Kunststoffmasse (9) bedruckten Bereiche (15, 16) miteinander fluchten. Nach Anordnung der beiden die Innenschicht (4) bildenden Folien (10, 11) zwischen den beiden Deckfolien (6, 7) wird die schäumbare Kunststoffmasse (9) aufgeschäumt und dann die Schichtanordnung laminiert.

## Beschreibung

Die Erfindung bezieht sich auf ein Verfahren zur Herstellung einer kontaktlosen Chipkarte nach dem Oberbegriff des Anspruchs 1.

Aus DE 196 46 184 A1 ist es bekannt, als Innenschicht zwei Einzelschichten zu verwenden, wobei in eine Einzelschicht eine ringförmige Ausnehmung für die Antennenspule und eine Ausnehmung für einen Teil des Chipmoduls und in die andere Einzelschicht eine Ausnehmung für den Rest des Chipmoduls gestanzt ist. Durch Toleranzen der Spule und des Chipmoduls entsteht zwischen der Aussparungsöffnung an der Oberfläche der Innenschicht und der Spule bzw. dem Chipmodul unvermeidlich ein mehr oder weniger breiter Spalt. Dadurch bilden sich Einsenkungen an der Oberfläche der laminierten Karte, die beim Bedrucken der Karte bei Verfahren, die eine glatte, ebene Oberfläche voraussetzen, beispielsweise mit einem Thermodruckkopf zu Bedruckungsfehlern, also unbedruckten Stellen führen.

Aus DE 198 43 425 A 1 ist bereits ein Verfahren nach dem Oberbegriff des Anspruchs 1 bekannt. Dabei ist die aus einer einzigen Schicht gebildete Innenschicht mit einer großen Ausnehmung zur Aufnahme des Chipmoduls und der Antennenspule versehen. In der Ausnehmung, die an der Unterseite durch eine Deckschicht verschlossen ist, wird die schäumbare Kunststoffmasse gegeben, und auf die schäumbare Kunststoffmasse das Chipmodul mit der Antennenspule. Auch ist es möglich, das Chipmodul mit der Antennenspule in die Ausnehmung zu legen und dann auf der oberen Seite der Innenschicht durch Siebdruck eine Schicht aus der schäumbaren Kunststoffmasse aufzubringen, auf die die weitere Deckschicht gelegt wird. Durch die relativ große Ausnehmung der Innenschicht können auch bei diesem Verfahren noch Bedruckungsfehler auftreten.

Aufgabe der Erfindung ist es, ein Verfahren bereitzustellen, mit dem auf einfache Weise Chipkarten mit einer einwandfreien ebenen Oberfläche erhalten werden.

Dies wird erfindungsgemäß mit dem in Anspruch 1 gekennzeichneten Verfahren erreicht. In den Unteransprüchen sind vorteilhafte Ausgestaltungen der Erfindung wiedergegeben.

Nach dem erfindungsgemäßen Verfahren besteht die Innenschicht aus zwei Folien, die mit ihren Innenseiten aufeinander gelegt sind. Jede der beiden Folien weist eine Ausnehmung auf, so dass die beiden miteinander fluchtenden Ausnehmungen der aufeinander gelegten Folien eine hinreichend tiefe Ausnehmung zur Aufnahme eines Chipmoduls bilden. Das Chipmodul weist wenigstens einen IC-Baustein auf einem Träger und wenigstens eine ringförmige Antennenspule auf, die mit dem IC-Baustein elektrisch leitend verbunden ist.

Auf die Innenseite im Bereich der Ausnehmung, also z.B. um die Ausnehmung herum, sind die beiden Folien mit einer schäumbaren Kunststoffmasse bedruckt. Ferner wird die Innenseite der beiden Folien mit der schäumbaren Kunststoffmasse in dem Bereich bedruckt, in dem die Antennenspule in der fertigen Karte angeordnet ist. Nach dem Bedrucken der Innenseite beider Innenschicht-Folien vorzugsweise durch Siebdruck wird das Chipmodul in die Ausnehmung einer der beiden Folien gelegt und die Antennenspule des Chipmoduls auf den mit schäumbarer Kunststoffmasse bedruckten Bereich dieser Folie. Dann werden beide Folien so aufeinander gelegt, dass die Ausnehmungen miteinander fluchten, also das Chipmodul in den miteinander fluchtenden Ausnehmungen beider Folien liegt. Zugleich wird die zweite Folie so auf die erste Folie gelegt, dass die mit schäumbarer Kunststoffmasse bedruckten Bereiche für die Antennenspule miteinander fluchten, d.h. die Antennespule zwischen der schäumbaren Kunststoffmasse auf beiden Folien angeordnet ist.

Alsdann wird die so gebildete Innenschicht zwischen den beiden Deckfolien angeordnet und die schäumbare Kunststoffmasse in dieser Schichtanordnung durch Erwärmen der Schichtanordnung aufgeschäumt. Danach wird die Schichtanordnung mit der darin gebildeten geschäumten Kunststoffmasse laminiert.

In der erfindungsgemäß herstellten Chipkarte ist die Antennenspule damit in Kunststoffschaum eingeschlossen. Die Ausnehmung für das Chipmodul in den beiden Folien, die die Innenschicht bilden, ist relativ klein. Das Chipmodul ist an seinen den beiden Deckfolien zugewandten Seiten mit Kunststoffschaum versehen, beispielsweise dadurch, dass die um die Ausnehmungen an den Innenseiten der Folien gedruckte schäumbare Kunststoffmasse durch den Spalt zwischen Chipmodul und Ausnehmungsrand beim Aufschäumen hindurch tritt.

Damit wird die Bildung von Einsenkungen an den Deckfolien verhindert, insbesondere auch die Bildung von Einsenkungen, die beim Abkühlen der Karte nach dem Laminieren auftreten.

Das Chipmodul und die Antennenspule bestehen nämlich aus Metall, insbesondere Kupfer. Wenn das Chipmodul oder die Antenne beim Laminieren in die Deckfolie aus Kunststoff gedrückt wird, hat dies zur Folge, dass sich Verwerfungen an der Oberfläche der Deckfolie nach dem Abkühlen der Karte von Laminiertemperatur auf Raumtemperatur bilden, welche durch die unterschiedlichen Wärmeausdehnungskoeffizienten von Metall einerseits und Kunststoff andererseits hervorgerufen werden.

Dem gegenüber sind in der erfindungsgemäßen Karte das Chipmodul und die Antennenspule in einem weichen, nachgiebigen Kunststoffschaum angeordnet, so dass eine Kontraktion des Chipmoduls und der Antennenspule beim Abkühlen der Karte nach dem Laminieren von dem Kunststoffschaum aufgenommen nicht auf die Deckfolien übertragen wird.

Da die erfindungsgemäße Karte eine glatte, ebene Oberfläche aufweist, kann sie z.B. mit einem Thermodruckkopf und einem Thermotransferband beispielsweise nach EP 153 693 mit einer thermoreaktiven oder sublimierbaren Farbschicht oder beispielsweise durch Off-Set-Druck ohne Bildung fehlerhaft bedruckter Stellen bedruckt werden. Dadurch ist eine einwandfreie Bedruckung, beispielsweise bei der Personalisierung der Karte mit dem Namen oder dem Foto des Karteninhabers oder sonstigen alphanumerischen Daten oder Bildern gewährleistet.

Die Innenschicht-Folien und die Deckfolien können aus irgendeinem laminierbaren thermoplastischen Kunststoff bestehen, z.B. PVC (Polyvinylchlorid), PET (Polyethylenterephthalat), PBT (Polybutylenterephthalat), ABS (Acrylonitril-Butadien-Styrol), PC (Polycarbonat), Polyethylen, Polypropylen, Polyamid oder PMMA (Polymethmethacrylat) oder Gemischen dieser Kunststoffe. Die Innenschicht-Folien und die Deckfolien können aus dem gleichen oder unterschiedlichen Kunststoffen bestehen. Die Dicke der Folien für die Zwischenschicht kann jeweils beispielsweise 100 bis 300 µm betragen, die Dicke der Deckfolien beispielsweise 50 bis 100 µm.

Die aufschäumbare Kunststoffmasse weist eine Aufschäumtemperatur auf, die unter der Laminiertemperatur liegt. Die Laminiertemperatur hängt von der Erweichungstemperatur des Kunststoffs der einzelnen Folien ab. Sie kann beispielsweise 130 bis 190°C betragen.

Die schäumbare Kunststoffmasse kann beispielsweise ein Gemisch aus einem Schäummittel und einem Prepolymeren sein, das nach dem Aufschäumen aushärtet, oder einem Prepolymeren mit Gruppen bestehen, aus denen beim Polymerisieren ein Gas, wie Kohlendioxid, zur Schaumbildung abgespalten wird, beispielsweise Polyurethan.

Nach dem erfindungsgemäßen Verfahren kann ein Kartenrohling hergestellt werden, indem zwei Folien, die die Innenschicht bilden, mit jeweils einer Ausnehmung für das Chipmodul und jeweils einem Aufdruck aus einer schäumbaren Masse im Bereich der Ausnehmung und in dem Bereich an der Innenseite versehen werden, an denen die Antennenspule angeordnet wird. Nach dem Anordnen der Innenschicht zwischen den beiden Deckfolien, dem Aufschäumen der Kunststoffmasse und dem Laminieren der Schichtanordnung kann dann der so erhaltene Kartenrohling beispielsweise durch Ausstanzen auf das Endformat der Karte gebracht werden.

Statt der Herstellung eines einzigen Kartenrohlings aus einer Schichtanordnung werden erfindungsgemäß bevorzugt jedoch eine Vielzahl von Kartenrohlingen aus einer Schichtanordnung erhalten. Dazu wird eine Schichtanordnung gebildet, die eine Vielzahl, beispielsweise 10 bis 100 Chipmodule mit Antennenspulen enthält. D.h. in die beiden Folien für die Innenschicht werden zur Aufnahme einer entsprechenden Vielzahl von Chipmodulen eine Vielzahl von Ausnehmungen gestanzt und dann die Innenseiten der Folien im Bereich der Ausnehmungen und den für die Antennenspulen der Chipmodule vorgesehenen Bereichen mit der schäumbaren Kunststoffmasse bedruckt. Alsdann werden die Chipmodule in die Ausnehmungen der einen Folie gegeben und die Antennenspulen dieser Chipmodule auf die dafür vorgesehenen, mit schäumbarer Kunststoffmasse bedruckten Bereiche dieser Folie gelegt. Die beiden Folien werden dann so aufeinander gelegt, dass die Ausnehmungen, die für die Antennenspulen vorgesehen sind, und die mit schäumbarer Kunststoffmasse bedruckten Bereiche miteinander fluchten. Die so gebildete Innenschicht mit einer Vielzahl von Chipmodulen und Antennenspulen wird zwischen den beiden Deckfolien angeordnet und nach dem Aufschäumen der schäumbaren Kunststoffmasse in der Schichtanordnung wird die Schichtanordnung laminiert, worauf die laminierte Schichtanordnung in einzelne Chipkarten zerteilt wird, also z.B. durch Schneiden oder Stanzen zu den einzelnen Kartenrohlingen im Endformat.

Die Bildung einer Vielzahl von Kartenrohlingen aus einer solchen Schichtanordnung kann dabei auch kontinuierlich erfolgen. Dazu kann je eine Vorratspule für die beiden Folien der Innenschicht und der Deckschicht vorgesehen sein, ferner eine Station zum Stanzen der Ausnehmungen für das Chipmodul in die beiden Innenschicht-Folien, eine Station zum Bedrucken der Innenseiten der Innenschicht-Folien mit schäumbarer Kunststoffmasse, eine Station zum Zusammenführen der Innenschicht-Folien mit aufeinander liegenden Innenseiten und zum Zusammenführen der Innenschicht und der beiden Deckschichten, eine Station zum Aufschäumen der Kunststoffmasse, eine Laminierstation und eine Station zum Vereinzeln der Karten, z.B. durch Stanzen oder Schneiden.

Vorzugsweise wird die Antennenspule auf dem mit schäumbarer Kunststoffmasse bedruckten Bereich auf der einen Folie fixiert, beispielsweise durch punktuelles Ankleben, bevor die andere Folie zur Bildung der Innenschicht auf die eine Folie gelegt wird.

Damit das in die Ausnehmung der einen Folie gelegte Chipmodul fixiert wird, bevor die andere Folie der Innenschicht darauf gelegt wird, kann unter der einen Folie eine Trägerfolie angeordnet sein.

Vorzugsweise werden die beiden die Innenschicht bildenden Folien nach dem Aufeinanderlegen und, sofern vorhanden, die Trägerfolie gegen seitliches Verrutschen fixiert, beispielsweise durch punktuelles Thermoschweißen oder Ankleben aneinander.

Damit die ringförmige Antennenspule eine möglichst große Länge besitzt, verläuft sie vorzugsweise parallel zum Außenrand der rechteckigen Chipkarte, d.h. sie weist gerade oder nur leicht nach außen gewölbte Abschnitte an den Längsseiten und an den Schmalseiten oder Endbereichen der Karte und stärker gekrümmte Abschnitte im Bereich der Ecken der Karte auf. Wenn sich die geraden oder nur leicht gekrümmten Abschnitte der Antennenspule an den Längsseiten der Karte beim Abkühlen nach dem Laminieren zusammenziehen, führt dies allenfalls zu einer Verschiebung der Antennenspule an den Schmalseiten oder Endbereichen der Karte in dem Kunststoffschaum. Dem gemäß reicht es aus, die schäumbare Kunststoffmasse nur an den Endbereichen der Antennenspule auf die Innenseiten der Folien zu drucken. D.h. vorzugsweise wird die schäumbare Kunststoffmasse zur Aufnahme der Antennenspule in Form U-förmiger Bereiche auf die Innenseiten der beiden Innenschicht-Folien an den Endbereichen der Karte gedruckt.

Nachstehend sind Ausführungsformen des erfindungsgemäßen Verfahrens anhand der beigefügten Zeichnung beispielhaft näher beschrieben. Darin zeigen:
Figur 1 eine Draufsicht auf die Innenseite einer der beiden Folien für die Innenschicht nach einer ersten Ausführungsform; Figur 2 schematisch im Querschnitt einen Teil der Schichtanordnung vor dem Schäumen der Kunststoffmasse;
Figur 3 im Querschnitt schematisch die aus dem Teil der Schichtanordnung gemäß Figur 2 gebildete Chipkarte; und
Figur 4 die Chipkarte nach Figur 3 in perspektivischer Wiedergabe ohne Deckfolien; und
Figur 5 eine Draufsicht auf die Innenseite einer der beiden Innenschicht-Folien nach einer zweiten Ausführungsform.

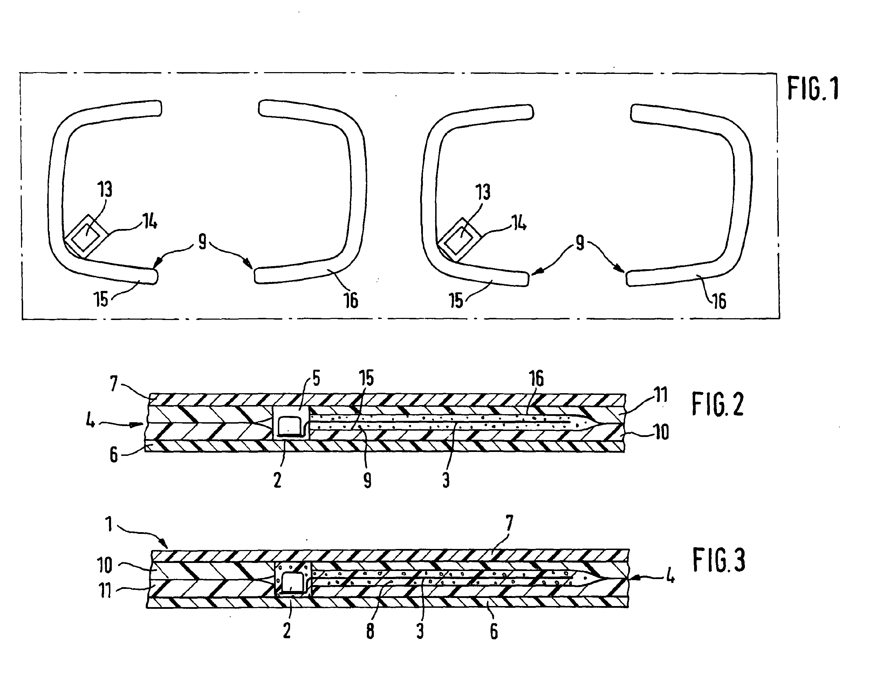

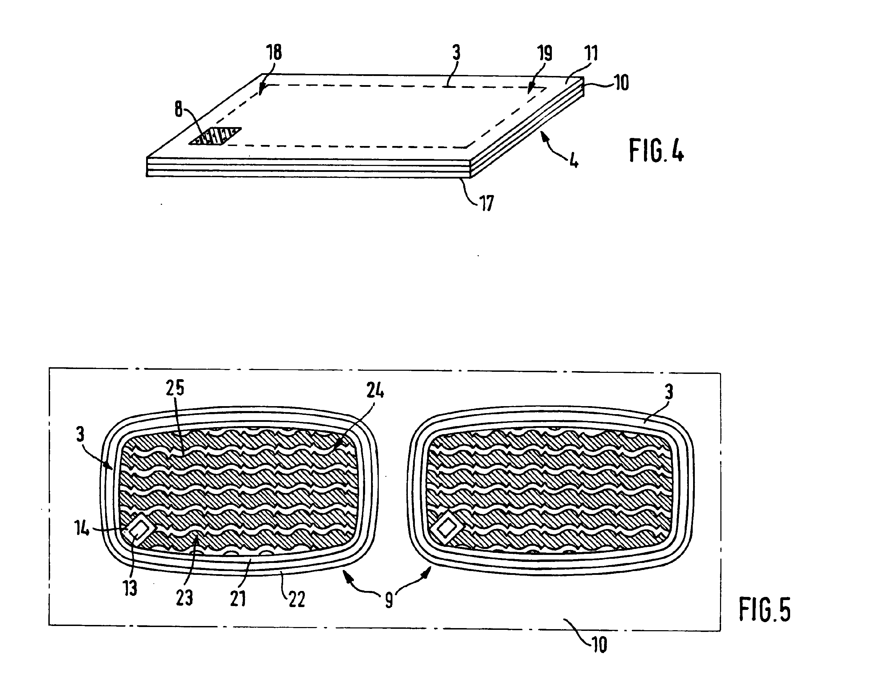

Gemäß Figur 3 weist die kontaktlose Chipkarte 1 ein Chipmodul 2 auf, an das eine Antennenspule 3 angeschlossen ist, die in Figur 4 gestrichelt dargestellt ist.

Die Chipkarte 1 wird durch Laminieren einer in Figur 2 dargestellten Schichtanordnung gebildet, welche aus einer Innenschicht 4 mit einer Ausnehmung 5 zur Aufnahme des Chipmoduls 2 und je einer Deckfolie 6 und 7 auf beiden Seiten der Innenschicht 4 unter Druck und Wärme gebildet wird.

Das Chipmodul 2 und die Antennenspule 3 sind nach Figur 3 in einen Kunststoffschaum 8 eingebettet, der aus der in Figur 2 dargestellten schäumbaren Kunststoffmasse 9 unter Wärmeeinwirkung gebildet wird.

Die Innenschicht 4 besteht aus zwei Folien 10 und 11, zwischen denen die Antennenspule 3 angeordnet ist. Die Innenseite eines Teil der Folie 10 ist in Figur 1 dargestellt. Da die Innenseiten beider Folien 10 und 11 identisch ausgebildet sind, wird nachstehend nur die Folie 10 näher beschrieben.

Die Folie 10 weist mehrere Ausnehmungen 13 auf. Der Bereich 14 um jede Ausnehmung 13 und die Bereiche 15, 16, die für die Antennenspulen 3 vorgesehen sind, sind vorzugsweise durch Siebdruck mit der schäumbaren Kunststoffmasse 9 bedruckt.

In die Ausnehmungen 13 werden, wie in Figur 1 dargestellt, die Chipmodule 2 gelegt und auf die Bereiche 15, 16 die daran angeschlossenen Antennenspulen 3. Auf die Folie 10 wird dann die an ihrer Innenseite identisch bedruckte und mit identischen Ausnehmungen für die Chipmodule versehene Folie 11 gelegt, und zwar so, dass die Ausnehmungen 13 und die für die Antennenspulen 3 vorgesehenen mit schäumbarer Kunststoffmasse 9 bedruckten Bereiche 15, 16 beider Folien 10, 11 miteinander fluchten, um die Innenschicht 4 mit der noch nicht geschäumten Kunststoffmasse 9 zu bilden.

Diese Innenschicht 4 wird gemäß Figur 2 dann zwischen den Deckfolien 6, 7 angeordnet. Die Schichtanordnung nach Figur 2 wird dann erwärmt, um die Kunststoffmasse 9 zu dem Kunststoffschaum 8 aufzuschäumen, worauf die Schichtanordnung laminiert wird. Aus der laminierten Schichtanordnung werden die Chipkarten 1 gemäß Figur 3 und 4 durch Vereinzeln hergestellt.

Um die Chipmodule 2 in der Folie 10 bzw. in der Schichtanordnung während der einzelnen Verfahrensschritte zu fixieren, kann unter der Folie 10 noch eine daran befestigte Trägerfolie 17 vorgesehen sein, die in Figur 4 dargestellt ist. D.h. die Innenschicht 4 wird dann durch die Folien 10, 11 und 17 gebildet.

Die U-förmigen Bereiche 15, 16 auf den Folien 10, 11, die mit schäumbarer Kunststoffmasse 9 bedruckt sind, entsprechen den Abschnitten 18, 19 der in Figur 4 gestrichelt dargestellten Antennenspule 3 an den Endbereichen der Chipkarte 1.

Die Innenseite der beiden Innenschicht-Folien nach der Ausführungsform gem. Figur 5 unterscheidet sich von der nach Figur 1 im wesentlichen dadurch, daß die schäumbare Kunststoffmasse 9 in dem für die Antennenspule 3 vorgesehenen Bereich in Form zweier paralleler Linien 21, 22 beiderseits der Antennenspule 3 aufgedruckt wird. Damit wird zum einen der Antennenspule 3 Platz für Dehnungen und Schrumpfungen gelassen. Zudem bestimmt die Antennenspule 3 den Abstand der Folien 10, 11 voneinander. Wenn die Antennenspule 3 auf der schäumbaren Masse 9 liegt, wie gemäß Fig. 1, wird dieser Abstand nur noch größer. Wenn hingegen die Antennenspule 3 zwischen den beiden Linien 21, 22 aus schäumbarer Masse 9 angeordnet ist, wird der Abstand der Folien 10, 11 in der laminierten Chipkarte lediglich von der Dicke der Antennenspule 3 bestimmt.

Weiterhin ist nach Figur 5 der Bereich 24 der Innenschicht-Folien 10, 11 innerhalb des Bereichs 21, 22, der für die Antennenspule 3 vorgesehen ist, mit einem beispielsweise wellenförmigen Muster 23 aus schäumbarer Masse 9 bedruckt. Durch das Muster 23 wird erreicht, daß der Abstand zwischen den Innenschicht-Folien 10, 11 in dem Bereich 24 nicht wesentlich kleiner ist als im Bereich der Antennenspule 3, das heißt, sich in dem Bereich 23 an der Oberfläche der Chipkarte keine Einsenkungen bilden, die beim Bedrucken der Chipkarte zu unbedruckten Stellen führen.

Das Muster 23 weist Zwischenräume 25 auf, damit beim Laminieren die Innenschicht-Folien 10, 11 zumindest im Bereich der Zwischenräume 25 direkt aneinander haften, also nicht durch Kunststoffschaum getrennt sind, der keine so gute Haftung vermittelt.

## Patentansprüche

1. Verfahren zur Herstellung einer kontaktlosen Chipkarte mit einem Chipmodul mit einer Antennenspule durch Laminieren einer Schichtanordnung aus einer Innenschicht mit einer Ausnehmung zur Aufnahme des Chipmoduls und je einer Deckfolie auf beiden Seiten der Innenschicht unter Druck und Wärme, wobei das Chipmodul und die Antennenspule in einem Kunststoffschaum angeordnet sind, der in der Schichtanordnung durch Erwärmen einer schäumbaren Kunststoffmasse gebildet wird, **dadurch gekennzeichnet, dass** die Innenschicht (4) aus zwei mit ihren Innenseiten aufeinander liegenden Folien (10, 11) gebildet wird, zwischen denen wenigstens eine Antennenspule (3) angeordnet ist, wobei jede Folie (10, 11) mit wenigstens einer Ausnehmung (13) versehen und an der Innenseite im Bereich der Ausnehmung (13) und dem für die Antennenspule (3) vorgesehenen Bereich (15, 16, 21, 22) mit einer schäumbaren Kunststoffmasse (9) bedruckt wird, in die Ausnehmung (13) einer der Folien (10, 11) das Chipmodul (2) und auf den für die Antennenspule (3) vorgesehenen Bereich (15, 16, 21, 22) die Antennenspule (3) gegeben wird, die beiden Folien (10, 11) so aufeinander gelegt werden, dass die Ausnehmungen (13) und die für die Antennenspule (3) vorgesehenen, mit der schäumbaren Kunststoffmasse (9) bedruckten Bereiche (15, 16, 21, 22) miteinander fluchten und nach Anordnung der beiden die Innenschicht (4) bildenden Folien (10, 11) zwischen den beiden Deckfolien (6, 7) die schäumbare Kunststoffmasse (9) aufgeschäumt und dann die Schichtanordnung laminiert wird.

2. Verfahren nach Anspruch 1, **dadurch gekennzeichnet, dass** die Antennenspule (3) auf der einen Folie (10, 11) fixiert wird, bevor die andere Folie (11, 10) auf die eine Folie (10, 11) gelegt wird.

3. Verfahren nach Anspruch 1 oder 2, **dadurch gekennzeichnet, dass** unter der Folie (10, 11) der Innenschicht (4), in deren Ausnehmung (13) das Chipmodul (2) und auf die die Antennenspule (3) gelegt wird, eine Trägerfolie (17) angeordnet wird.

4. Verfahren nach Anspruch 1 oder 3, **dadurch gekennzeichnet, dass** die beiden die Innenschicht (4) bildenden Folien (10, 11) nach dem Aufeinanderlegen und ggf. die Trägerfolie (17) gegen seitliches Verrutschen fixiert werden.

5. Verfahren nach Anspruch 1, **dadurch gekennzeichnet, dass** die Antennenspule (3) sich vom einen Endbereich zum anderen Endbereich der Chipkarte (1) erstreckt und die schäumbare Kunststoffmasse (9) nur im Bereich der Abschnitte (18, 19) der Antennenspule (3) an den Endbereichen der Chipkarte (1) auf die Folien (10, 11) der Innenschicht (4) aufgedruckt wird.

6. Verfahren nach einem der vorstehenden Ansprüche, **dadurch gekennzeichnet, daß** der für die Antennenspule (3) vorgesehene Bereich auf den Folien (10, 11) beiderseits (21, 22) der Antennenspule (3) mit der schäumbaren Masse (9) bedruckt ist.

7. Verfahren nach einem der vorstehenden Ansprüche, **dadurch gekennzeichnet, daß** der Bereich (24) der von der Antennenspule (3) umschlossen wird, mit der schäumbaren Masse (9) mit einem Muster (23) bedruckt wird.

8. Verfahren nach einem der vorstehenden Ansprüche, **dadurch gekennzeichnet, dass** das Aufdrucken der schäumbaren Kunststoffmasse (9) durch Siebdruck erfolgt.

9. Verfahren nach einem der vorstehenden Ansprüche, **dadurch gekennzeichnet, dass** eine Vielzahl von Ausnehmungen (13) in die beiden Folien (10, 11) zur Aufnahme einer Vielzahl von Chipmodulen (2) gestanzt und die Innenseiten der Folien (10, 11) im Bereich der Ausnehmungen (13) und den für die Antennenspulen (3) vorgesehenen Bereichen (15, 16, 21, 22) mit der schäumbaren Kunststoffmasse (9) bedruckt werden, und die Schichtanordnung aus den die Innenschicht (4) bildenden mit einer Vielzahl von Chipmodulen (2) und Antennenspulen (3) versehenen Folien (10, 11) und den Deckfolien (6, 7) nach dem Aufschäumen der schäumbaren Kunststoffmasse (9) laminiert und dann in einzelne Chipkarten (1) zerteilt wird.

10. Verfahren nach einem der vorstehenden Ansprüche, **dadurch gekennzeichnet, dass** die Deckfolien (6, 7) der laminierten Schichtanordnung oder der einzelnen Chipkarten (1) bedruckt werden.
